# NEW EUROPEAN PATENT SPECIFICATION

(11) **EP 0 474 296 B2**
(45) Date of publication and mention of the opposition decision: **18.12.1996**
(45) Mention of the grant of the patent: 04.08.1993
(21) Application number: 91202211.8
(22) Date of filing: 30.08.1991
(51) Int. Cl.: C02F 3/12, C02F 3/30

(54) **Apparatus for the purification of waste water**
Vorrichtung für die Reinigung von Abwässern
Appareil pour la purification d'eau usée

(30) Priority: 07.09.1990 NL 9001974
(43) Date of publication of application: 11.03.1992
(73) Proprietor: DHV Water B.V., NL-3818 EX Amersfoort (NL)
(72) Inventor: Dijkhorst, Jacobus, NL-3711 BR Austerlitz (NL)
(74) Representative: Metman, Karel Johannes

(56) References cited:
- DE-C- 2 913 132
- NL-A- 8 301 500
- US-A- 3 900 394
- US-A- 4 159 243
- JOURNAL OF THE WATER POLLUTION CONTROL FEDERATION. vol. 59, no. 10, October 1987, WASHINGTON US pages 871 - 876; JON H. BENDER: 'ASSESSMENT OF DESIGN TRADEOFFS WHEN USING INTRACHANNEL CLARIFIERS'
- N.Schneider, J.Diefenbach: "Abwasserreinigung in der Lebensmittelindustrie, Methoden und Beispiele", Sonderdruck aus "Industrieabwässer1981", Deutscher Kommunal-Verlag GmbH Düsseldorf, pages 16-21
- Lehr- und Handbuch der Abwassertechnik, 3. Auflage, 1985, vol.IV, pages 352-356
- S.Schlegel : "Bemessung und Ergebnisse von Belebungsanlagen mit Nitrifikation und vorgeschalteter Kaskadendenitrifikation", Wasser-Abwasser gwf, vol. 128 (1987) no.8, pages 422-431

## Description

### FIELD OF THE INVENTION

The invention relates to an apparatus for the purification of liquid, in particular waste water.

### BACKGROUND OF THE INVENTION

In the purification of waste water, chemical and biologically oxidizable substances, hereafter abbreviated with the term CZV, should be removed. Moreover, it is the objective to eliminate nutrients such as nitrogen and phosphorus compounds contained in the waste water. Generally the CZV contained in the waste water is oxidized by means of oxygen. Nitrogen compounds are frequently found in raw waste water in the form of organically bound nitrogen and, to a larger extent, in the form of ammonium nitrogen. The biologic decomposition of ammonium nitrogen generally takes place in two steps. In a first step ammonium is transformed, by using oxygen, into nitrite and nitrate by specific micro-organisms, hereafter called nitrifying micro-organisms. These transformations, hereafter called: nitrification, lead to a decrease of the alkalinity. The required oxygen can be introduced by means of an aerating system. The specific micro-organisms as mentioned generally do not require a carbon source, have a small growing rate and are fairly sensitive to low temperatures.

In a second step of the biological nitrogen removal the formed nitrite and nitrate are transformed into gaseous nitrogen compounds, such as N₂, NO and N₂O, by another type of micro-organisms, hereafter called: denitrifying micro-organisms. These transformations, here summarized by the term: denitrification, mostly occur only with low oxygen pressure. Nitrate and nitrite thereby serve as electron acceptor instead of oxygen in the oxidation of CZV. Contrary to most of the nitrifying micro-organisms, denitrifying micro-organisms do use a carbon source, e.g. CZV. The denitrification progresses at a high rate with the fraction of the CZV consisting of easily decomposable compounds such as lower fatty acids and alcohols, hereafter called: exogenous denitrification. For components of the CZV which are difficult to decompose, and by using an endogenous carbon source, hereafter called: endogenous denitrification, the denitrification progresses much slower. Denitrification leads to an increase of the alkalinity.

Applied in practice of waste water purification the above known facts have the following meaning. Extensive biological removal of nitrogen compounds from waste water implicates not only a nearly full nitrification, but also an optimalization of the denitrification. Raw waste water generally contains CZV having a certain fraction of easily decomposable CZV. Denitrification can only take place after nitrite and nitrate are formed from ammonium and organically bound nitrogen in an aerated stage of the purification process. Denitrification has the advantage that it saves aerating capacity, because a part of the CZV is not transformed by oxygen, but by oxidized nitrogen components. Moreover denitrification is slightly counteracting the alkalinity consuming effect of the nitrification. Therefore, the dosage of acidity correcting chemicals can be reduced or even be eliminated. Finally the denitrification also leads to an effluent which is cleared of nitrate and thus is more pure so that a better purification result is obtained.

The desire to achieve denitrification has lead to a variety of reactor configurations and purification apparatus which can be devided into the following types.

In a first type denitrification takes place in a separate space following the aerobic space in which the nitrite and nitrate are formed from ammonium and organically bound nitrogen. This post-denitrification may require the dosage of an external carbon source such as methanol, because the required CZV, and certainly the easily decomposable fraction thereof in the waste water, is mainly oxidized by means of oxygen in the pre-arranged aerobic space. Disadvantages of this type of apparatus are to be seen in that they save only little on aerating energy and may create high costs due to the necessary dosage of the external carbon source.

In a second type of purification apparatus denitrification takes place prior to the aerobic step in which the nitrate and nitrite are formed from ammonium and organically bound nitrogen. By supplying all or a part of the raw waste water to this pre-denitrification, the quick, exogenous denitrification is made possible. Advantages with respect to the first type are a bigger saving on aerating energy and a redundancy of the dosage of external substrate. The arrangement of the nitrification after the denitrification, however, requires a high external recirculation of the nitrate and nitrite, formed in the aerobic reactor, to the denitrification space. Disadvantage of this type is therefore the high recirculation factor and the pump capacity required therein for an extensive nitrogen removal.

In a third type of purification apparatus nitrification and denitrification take place within one space by creating oxygen rich and oxygen poor zones. The easily decomposable fraction of the CZV in the raw waste water, dependant on the position of input into this circulation system, can promote the (quick) exogenous denitrification to a larger or smaller extent, just like in the second type. Advantage of this simultaneous denitrification with respect to the second type is the absence of an external recirculation for nitrate and nitrite. Disadvantage of the third type, however, is that it is often difficult to control the residence time in the oxygen poor zone(s), which often depends on the oxygen input adjusted to full nitrification, and which is therefore mostly too short for an efficient and extensive denitrification.

The Dutch patent application 8301500 discloses a modification of the apparatus of the third type in which the disadvantages mentioned are counteracted to a small extent. In this modification all raw waste water is introduced into an oxygen poor zone of the circulation system serving as denitrification space, which zone may be reduced and enlarged by means of adjustable flaps with simultaneous enlargement or reduction respectively of the oxygen rich portion in the system. However, this system has a number of disadvantages, which remove the dominant objections of the third type only partially and do not use the advantages of the second type to an optimum extent.

A first disadvantage is that most of the time the obtainable extension of the residence time within the additional oxygen poor zone will still not be large enough for an optimum use of the possibility of exogenous denitrification. As second disadvantage results when the blades, which are adjustable about a vertical axis as described in the above patent application, are adjusted in order to be able to control the flow conditions between channel portions, a decrease of flow rate in the leg guarded by the blade will already quickly take place to such extent that the biomass there cannot be kept in suspension anymore, the latter being a prerequisite for good purification results. A third disadvantage is that within the oxygen poor channel portion of the apparatus described in said patent application there is formed a plug flow whereby no full mixing of influent and the waste water within the denitrification space occurs. In case of the often discontinuous supply of influent, however, a nearly full mixing of influent and the waste water within the denitrification space is preferred in order to cause the denitrification to be more efficient.

### DISCLOSURE OF THE INVENTION

DE-C-29 13 132 discloses an apparatus for the purification of waste water. Here, the primary and secondary circulation systems are arranged concentrically with the secondary circulation system inwardly of the primary circulation system.

S. Schlegel: "Bemessung und Ergebnisse von Belebungsanlagen mit Nitrifikation und vorgeschalteter Kaskadendenitrifikation", Wasser-Abwasser gwf, 128 (1987) H.8, page 422-431 discloses an apparatus in accordance with the preamble of claim 1.

The apparatus according to the invention comprises a reservoir (1) including a primary circulation system (2) for the liquid therein, an influent supply (5) and effluent discharge (6) connected to the reservoir (1), propulsion means (4A, 4B) for circulating the liquid in the circulation system (2) and an aerating means (4A, 4B) for introducing oxygen into the liquid, the reservoir (1) being equipped with a denitrification space (7) connecting with the remainder of the reservoir (1) through an inlet (8) and outlet (9) and to which the influent supply (5) connects, and wherein a secondary circulation system is formed within the denitrification space (7) having its own propulsion means (10), whereby the secondary circulation system is arranged outwardly of the primary circulation system (2) and the circulation systems (2, 7) adjoining only along a part of their circumference, wherein the denitrification space (7) is provided with a central wall (11), and wherein the inlet (8) of the secondary circulation system in the denitrification space (1) is connected to the primary circulation system (2) adjacent to the aerating means (4B) in the primary circulation system (2) and that the primary circulation system (2) is provided with baffle means (16) proximate to said aerating means (4B) for guiding aerated liquid in the primary circulation system (2) away from the inlet (8) of the secondary circulation system. Preferred embodiments are defined in the dependent claims.

The invention offers a number of important advantages in comparison with the conventional systems. For instance, it is possible to obtain longer residence times within the created denitrification space having its own circulation system, compared to the conventional or described circulation systems, such as that of the Carrousel-type. A longer residence time under oxygen poor conditions can lead to a larger fraction of denitrifying micro-organisms in the biomass. A longer residence time also means that a greater part of the easily decomposable fraction of the CZV is available for exogenous denitrification. Due to the installation of separate propulsion means within the denitrification space and by using the circulation principle also in this space, there is enabled an optimalization between the saving of energy by denitrification on the one hand and the use of energy for the purpose of circulating the biomass within said space and keeping it in suspension of, on the other hand. Most of the time there will still be found nitrogen poor zones in the circulation system including the aerating means, in which some exogenous and especially endogenous denitrification can take place. By creating an oxygen deficiency zone having a supply of easily decomposable CZV from raw waste water the situation may arise in which nitrate and nitrite concentrations will come to lie at such a low degree that the conditions for biological phosphate removal, in this case: the growing conditions for phosphate accumulating bacteria, is promoted. This possibility is considered an additional advantage of the invention.

Preferably, in the inlet and/or outlet of the circulation system within the denitrification space there are arranged controllable closure means.

Due to these controlled closure means the residence time of the liquid within the denitrification space can be controlled.

Herein it is of advantage when the controllable closure means are controlled by a control signal of one or more monitors in one of the circulation systems, in the influent supply and/or in the effluent discharge for monitoring the contents of nitrogen components and/or oxygen and/or for measuring the redox-potential.

In this way the residence time of the liquid within the denitrification space may automatically be controlled if desired.

A special embodiment of the apparatus according to the invention is characterized in that the secondary circulation system is integrated with the reservoir of the primary circulation system.

This embodiment is particularly suited for adapting existing purification installations in which consequently part of the existing primary circulation system is converted into the secondary circulation system.

An alternative possibility is that the denitrification space is arranged beside the reservoir of the primary circulation system.

This embodiment is especially suited for apparatus to be built new or for existing apparatus of which the capacity of the primary circulation system is too small to be partially converted into a secondary circulation system.

It is essential that the inlet of the secondary circulation system in the denitrification space is connected to the primary circulation system within a portion thereof containing oxygen poor liquid, during operation of the apparatus.

Due to this position of the inlet of the secondary circulation system into the denitrification space it is possible to obtain very favourable conditions within the denitrification space because the liquid entering it from the primary circulation system is already oxygen poor to a large extent.

The invention will hereafter be elucidated with reference to the drawing showing two embodiments of the apparatus for the purification of waste water according to the invention by way of example.

### BRIEF DESCRIPTION OF THE DRAWINGS

Fig. 1 is a very schematic plan view of a first embodiment of the apparatus for the purification of waste water according to the invention.

Fig. 2 is a view corresponding to that of fig. 1 of a second embodiment of the apparatus for the purification of waste water according to the invention.

### DESCRIPTION OF PREFERRED EMBODIMENTS

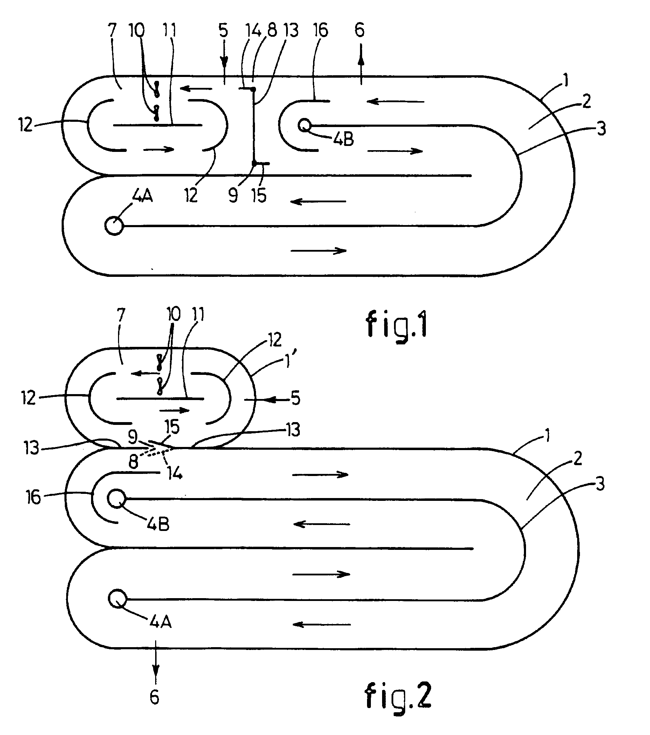

Fig. 1 shows an embodiment of the apparatus for the purification of waste water, comprising a reservoir 1 having a circulation system 2 therein for causing waste water containing suspended biomass and being supplied to the reservoir 1 to circulate therein. The circulation system 2 as shown is constructed according to the principle which is known in practice under the name Carrousel, but the invention is also applicable to other circulation systems.

The circulation system 2 includes a central wall 3 for separating flow channels going back and forth. The aerators 4A, 4B are arranged at the ends of the central wall 3 for causing the waste water within the circulation system to circulate by means of propulsion on the one hand, and for introducing air and consequently oxygen into the waste water on the other hand.

Influent is supplied to the reservoir 1 by an influent supply 5, and effluent is discharged from the reservoir by an effluent discharge 6. The biomass carried by the effluent is allowed to be separated from the effluent in an after-settling tank (not shown). In principle, however, it is also possible to remove the biomass from the effluent already within the reservoir.

According to the invention the apparatus is provided with a separate denitrification space 7 which is in open communication with the circulation system 2 by means of an inlet 8 and an outlet 9 and which is provided with its own, secondary circulation system.

The circulation system within the denitrification space 7 includes propulsion means 10, a central wall 11 and flow baffles 12. As appears from the drawing the influent supply 5 connects to this denitrification space 7 at such a position so as to directly obtain a good mature of the influent from the influent supply 5 with the contents of the denitrification space 7 requiring only a small energy input.

As can be seen clearly in the drawing the denitrification space 7 is formed within the reservoir 1 by disposing a partition wall 13 transversely into one of the legs of the U-shaped reservoir 1. In this manner an existing reservoir 1 may be adapted in order to integrate the invention therein.

The inlet 8 and the outlet 9 of the denitrification space 7 are closable to a greater or smaller extent by means of controllable closure means 14, 15 respectively which may consist of movable doors, slides or the like. In the embodiment shown by way of example the closure means 14 and 15 consist of doors which are pivotable about a vertical axis. The adjustment of the controllable closure means 14 and 15 may be coupled, for each separately, to the signal of a monitor of (a) nitrogen component(s) and/or oxygen and/or by the signal of a redox-potential measurement in one of the circulation systems and/or influent supply 5 and/or effluent supply 6. With this means the residence time of the waste water within the denitrification space 7 may be varied depending on the condition of the waste water.

The inlet 8 of the denitrification space 7 is situated such that relatively oxygen poor waste water will flow from the circulation system 2 into the denitrification space 7 since the inlet 8 is in a position distant from the aerator 4A, while there is arranged a flow baffle 16 around the nearby aerator 4B, which prevents oxygen rich waste water from flowing out of the circulation system 2 and into the denitrification space 7.

Fig. 2 shows a modified embodiment of the apparatus of fig. 1, which is similar regarding operation and principle, but in which the denitrification space 7 is accommodated within a separate reservoir part 1' which is arranged beside the main reservoir 1. The partition wall 13 between the denitrification space 7 and the circulation system 2 now coincides with the outer wall of the reservoir 1.

The inlet 8 and the outlet 9 of the denitrification space 7 are, in this case, arranged one above the other in the partition wall 13, wherein the controllable closure means 14 of the inlet 8, which is constructed as a door pivotable about a vertical axis, pivots from the denitrification space 7 outwardly, while the controllable closure means 15 of the outlet 9, which is constructed as a door pivotable about a vertical axis, pivots inwardly into the denitrification space 7 so that the flows of both circulation systems are exchanged in a natural way. Of course it is also possible to arrange the inlet 8 and the outlet 9 of the denitrification space 7 side-by-side in the partition wall 13.

As mentioned earlier, the invention is also applicable to other circulation systems than that of the Carrousel type. For instance, it is possible to replace the aerators 4 by individual aerating and propulsion means, such as bubble aerators in combination with propellers and/or motors having horizontal vertical axes of rotation.

The invention is not restricted to the embodiments shown in the drawing and described herein before, which can be varied in different manners within the scope of the appended claims.

## Claims

1. Apparatus for the purification of liquid, in particular waste water, comprising a reservoir (1) including a primary circulation system (2) for the liquid therein, an influent supply (5) and effluent discharge (6) connected to the reservoir (1), propulsion means (4A, 4B) for circulating the liquid in the circulation system (2) and an aerating means (4A, 4B) for introducing oxygen into the liquid, the reservoir (1) being equipped with a denitrification space (7) connecting with the remainder of the reservoir (1) through an inlet (8) and outlet (9) and to which the influent supply (5) connects, and wherein a secondary circulations system is formed within "the denitrification space (7) having its own propulsion means (10), whereby the secondary circulation system is arranged outwardly of the primary circulation system (2) and the circulation systems (2, 7) adjoining only along a part of their circumference, **characterized** in that the denitrification space (7) is provided with a central wall (11), and wherein the inlet (8) of the secondary circulation system in the denitrification space (1) is connected to the primary circulation system (2) adjacent to the aerating means (4B) in the primary circulation system (2) and that the primary circulation system (2) is provided with baffle means (16) proximate to said aerating means (4B) for guiding aerated liquid in the primary circulation system (2) away from the inlet (8) of the secondary circulation system.

2. Apparatus according to claim 1, wherein in the inlet and/or outlet of the secondary circulation system within the denitrification space there are arranged controllable closure means.

3. Apparatus according to claim 2,wherein the controllable closure means are controlled by a control signal of one or more monitors in one of the circulation systems, in the influent sypply and/or in the effluent discharge for monitoring the contents of nitrogen components and/or oxygen and/or for measuring the redox-potential.

4. Apparatus according to one of claims 1-3, wherein the secondary circulation system is integrated with the reservoir of the primary circulation system.

5. Apparatus according to claims 1-4, wherein the inlet of the secondary circulation system is arranged within the denitrification space in the neighbourhood of the aerating means which is guarded from the inlet by baffle means.

6. Apparatus according to one of claims 1-5, wherein the secondary circulation system within the denitrification space comprises flow baffle means.

## Patentansprüche

1. Vorrichtung zur Reinigung von Flüssigkeit, insbesondere Abwasser, umfassend ein Reservoir (1) mit einem primären Umwälzsystem (2) für die darin enthaltene Flüssigkeit, einen an das Reservoir (1) angeschlossen Wasserzulauf (5) und einen Abwasserablauf (6), Antriebsmittel (4A, 4B) zur Umwälzung der Flüssigkeit in dem Umwälzsystem (2), und ein Belüftungsmittel (4A, 4B) zur Einführung von Sauerstoff in die Flüssigkeit, wobei das Reservoir (1) mit einem Denitrifikationsraum (7) ausgestattet ist, der mit dem übrigen Reservoir (1) über einen Einlaß (8) und einen Auslaß (9) verbunden ist, und an den der Wasserzulauf (5) angeschlossen ist, und bei der ein sekundäres Umwälzsystem innerhalb des Denitrifikationsraums (7) gebildet wurde, mit einem eigenen Antriebsmittel (10), wodurch das sekundäre Umwälzsystem außerhalb des primären Umwälzsystems (2) angeordnet ist und die Umwälzsysteme (2, 7) nur an einem Teil ihres Umfangs aneinandergrenzen, dadurch gekennzeichnet, daß der Denitrifikationsraum (7) mit einer zentralen Wand (11) ausgestattet ist, und bei der der Einlaß (8) des sekundären Umwälzsystems in dem Denitrifikationsraum (1) an das primäre Umwälzsystem (2) angeschlossen ist, angrenzend an das Belüftungsmittel (4B) in dem primären Umwälzsystem (2), sowie dadurch, daß das primäre Umwälzsystem (2) mit Ablenkmitteln (16) in der Nähe des genannten Belüftungsmittels (4B) ausgestattet ist, um belüftete Flüssigkeit in das primäre Umwälzsystem (2) und vom Einlaß (8) des sekundären Umwälzsystems wegzuführen.

2. Vorrichtung nach Anspruch 1, bei der in dem Einlaß und/oder Auslaß des sekundären Umwälzsystems innerhalb des Denitrifikationsraums steuerbare Verschlußmittel angeordnet sind.

3. Vorrichtung nach Anspruch 2, bei der die steuerbaren Verschlußmittel von einem Steuersignal eines oder mehrerer Monitore in einem der Umwälzsysteme in dem Wasserzulauf und/oder in dem Anwasserablauf gesteuert werden, zur Überwachung des Gehalts an Stickstoffbestandteilen und/oder Sauerstoff und/oder zur Messung des Redoxpotentials.

4. Vorrichtung nach einem der Ansprüche 1-3, bei der das sekundäre Umwälzsystem in das Reservoir des primären Umwälzsystems integriert ist.

5. Vorrichtung nach Anspruch 1-4, bei der der Einlaß des sekundären Umwälzsystems innerhalb des Denitrifikationsraums in der Nähe des Belüftungsmittels angeordnet ist, das gegenüber dem Einlaß durch Anlenkmittel geschützt ist.

6. Vorrichtung nach einem der Ansprüche 1-5, bei der das sekundäre Umwälzsystem innerhalb des Denitrifikationsraums Strömungsablenkmittel umfaßt.

## Revendications

1. Dispositif pour la purification de liquide, notamment de l'eau usée, comprenant un réservoir (1) comportant un système de circulation primaire (2) pour le liquide à l'intérieur de celui-ci, une alimentation d'affluents (5) et une évacuation d'effluent (6) raccordées au réservoir, des moyens d'entraînement (4A, 4B) pour faire circuler le liquide dans le système de circulation (2) et des moyens d'aération (4A, 4B) pour introduire de l'oxygène dans le liquide, le réservoir (1) étant équipé d'un espace de dénitrification (7) raccordé au restant du réservoir (1) par une ouverture d'entrée (8) et une ouverture de sortie (9) et auquel l'alimentation d'affluents (5) est connectée, et dans lequel un système de circulation secondaire est formé à l'intérieur de l'espace de dénitrification (7) comportant ses propres moyens d'entraînement (10), le système de circulation secondaire (2) étant agencé à l'extérieur du système de circulation primaire (2) et les systèmes de circulation (2, 7) ne se touchant que le long d'une partie de leur circonférence, caractérisé en ce que l'espace de dénitrification (7) est équipé d'une paroi centrale (11), et en ce que l'ouverture d'entrée (8) du système de circulation secondaire dans l'espace de dénitrification (7) est reliée au système de circulation primaire (2) au voisinage des moyens d'aération (4B) du système de circulation primaire, et en ce que le système de circulation primaire (2) est équipé de moyens formant chicane (16), au voisinage desdits moyens d'aération (4B), pour guider le liquide aéré, dans le système de circulation primaire (2), dans un sens qui l'éloigne de l'ouverture d'entrée (8) du système de circulation secondaire.

2. Dispositif selon la revendication 1, dans lequel des moyens de fermeture pouvant être commandés sont agencés dans l'ouverture d'entrée et/ou de sortie du système de circulation secondaire dans l'espace de dénitrification.

3. Dispositif selon la revendication 2, dans lequel des moyens de fermeture adaptés pour être commandés sont commandés par un signal de commande d'un ou plusieurs instruments de contrôle disposés dans l'un des systèmes de circulation, dans l'alimentation d'affluents et/ou dans l'évacuation d'effluents pour contrôler la teneur en composants à base d'azote et/ou d'oxygène et/ou pour mesurer le potentiel redox.

4. Dispositif selon l'une des revendications 1 à 3, dans lequel le système de circulation secondaire est intégré dans le réservoir du système de circulation primaire.

5. Dispositif selon les revendications 1 à 4, dans lequel l'ouverture d'entrée du système de circulation secondaire est agencée à l'intérieur de l'espace de dénitrification dans le voisinage des moyens d'aération lesquels sont protégés de l'ouverture d'entrée par des moyens à déflecteur.

6. Dispositif selon l'une des revendications 1 à 5, dans lequel le système de circulation secondai re à l'intérieur de l'espace de dénitrification comprend des moyens à déflecteur de flux,
